# EUROPEAN PATENT SPECIFICATION

(11) **EP 4 099 528 B1**
(45) Date of publication and mention of the grant of the patent: **13.08.2025**
(21) Application number: 21761775.2
(22) Date of filing: 17.02.2021
(51) Int. Cl.: H02G 3/04, H02G 3/00, B60R 16/02

(54) **WIRE HARNESS EXTERIOR BODY, AND WIRE HARNESS WITH EXTERIOR BODY**
KABELBAUM-AUSSENKÖRPER UND KABELBAUM MIT AUSSENKÖRPER
CORPS EXTÉRIEUR DE FAISCEAU DE CÂBLES ET FAISCEAU DE CÂBLES POURVU DU CORPS EXTÉRIEUR

(30) Priority: 27.02.2020 JP 2020032238
(43) Date of publication of application: 07.12.2022
(73) Proprietor: FURUKAWA ELECTRIC CO., LTD., Tokyo 100-8322 (JP); FURUKAWA AUTOMOTIVE SYSTEMS INC., Shiga 522-0242 (JP)
(72) Inventor: OSHINO, Takashi, Tokyo 100-8322 (JP); SUYAMA, Hiroshi, Tokyo 100-8322 (JP); KOJIMA, Naoyuki, Tokyo 100-8322 (JP)
(74) Representative: Winter, Brandl - Partnerschaft mbB
(86) International application number: PCT/JP2021/005948
(87) International publication number: WO 2021/172136

(56) References cited:
- WO-A1-2016/098657
- WO-A1-2019/225030
- WO-A1-2019/225030
- JP-A- 2010 200 577
- JP-A- 2013 027 169
- JP-A- 2014 014 230
- JP-A- 2014 117 099
- JP-A- 2014 117 099
- JP-A- 2015 122 923
- JP-A- 2015 122 923
- JP-A- H08 178 132
- US-A1- 2017 327 060

## Description

### TECHNICAL FIELD

The present invention relates to a sheathed wire harness.

### BACKGROUND ART

A wire harness is adapted to be laid in a vehicle or the like, and is formed by combining a bundle of a plurality of wires for power supply and signal communication with connectors and terminals. In order to ensure that these connectors and terminals are positioned at appropriate locations in a vehicle or the like, it is necessary to properly regulate a path for the wire harness.

Conventionally, a path for a wire harness is regulated by bundling the wires together with a resin rod made of polypropylene or other material, or by passing the wire harness through a hollow space inside a corrugated tube produced by extrusion molding or a cylindrical protector produced by injection molding (see, for example, JP 2019 - 13 106 A, JP 2015 - 122 923 A, WO 2019 / 225 030 A1, US 2017 / 327 060 A1, JP 2014 - 117 099 A, JP 2014 - 014 230 A, JP H08 178132 A, JP 2013 027169 A). A further relevant prior art is JP 2010 - 200577 A.

### DISCLOSURE OF THE INVENTION

### Problems to be Solved by the Invention

However, in the case in which a resin rod and wires are bundled together as described above, it is difficult to deform the resin rod into a shape fittable to a path having a complicated shape such as curved shape, and further, the cross-sectional area of the wire harness increases by the volume of the resin rod. For these reasons, such a wire harness with a resin rod is not suitable for application to a path in a narrow space, and may make it impossible to sufficiently regulate the path for the wire harness. In the case of the corrugated tube and the protector, which have a constant cross-sectional area, dead space tends to be created therein when its three-dimensional shape, such as a cylindrical shape, is flattened, thereby making it difficult to save space in a vehicle or the like in which a wire harness with the corrugated tube or the protector is laid.

The present invention has been achieved in view of the above circumstances, and it is an object of the present invention to provide a sheathed wire harness that make it possible to suitably regulate a path for the wire harness and to reduce dead space so as to save space in a vehicle or the like in which the wire harness is laid.

### Means for Solving the Problems

This object is solved by the subject matter of the independent claim 1. Further aspects are disclosed in the dependent claims. The present inventors have conducted studies to attain the above-described object. As a result of the studies, the present inventors have achieved the present invention based on the following findings: suitable regulation of a path for a wire harness, reduction of dead space, and space saving in a vehicle or the like in which the wire harness is laid can be achieved by a of a sheathed wire harness according to independent claim 1.

### Effects of the Invention

The present invention makes it possible to suitably regulate a path for a wire harness of a sheathed wire harness, and enables reduction of dead space to achieve space saving in a vehicle or the like in which the wire harness is laid.

### BRIEF DESCRIPTION OF THE DRAWINGS

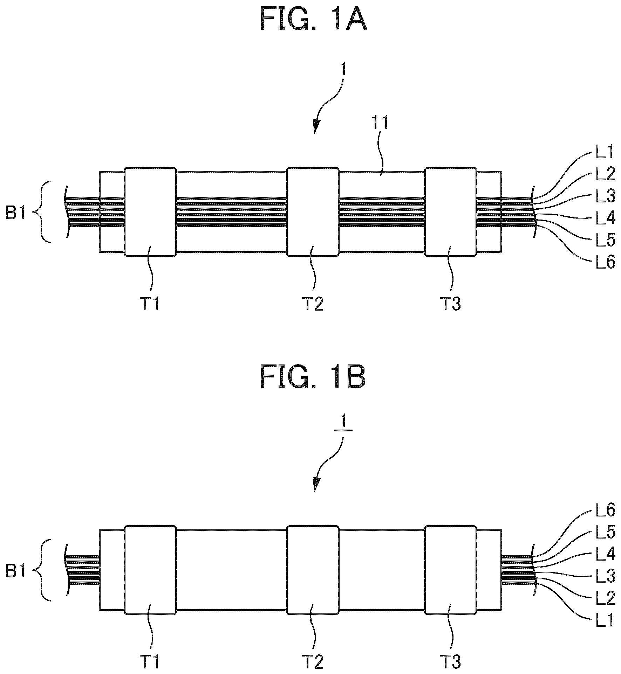

FIGS. 1A and 1B illustrate a wire harness sheath according to an embodiment not according to the claimed invention in a state in which the wire harness sheath is in contact with and supports one surface of a wire assembly of a wire harness, wherein FIG. 1A is a schematic planar view of the wire harness sheath seen in a direction in which its surface, which is in contact with and supports the one surface of the wire assembly, faces the viewer, and FIG. 1B is a schematic planar view of the wire harness sheath seen in a direction in which a surface opposite to the surface, which is in contact with and supports the one surface of the wire assembly, faces the viewer;
FIGS. 2A, 2B and 2C illustrate a wire harness sheath according to an embodiment of the present invention in a state in which the wire harness sheath is in contact with and supports one surface of a wire assembly of a wire harness, wherein FIG. 2A is a perspective view, FIG. 2B is a cross-sectional view taken along line A-A in FIG. 2A, and FIG. 2C is a cross-sectional view taken along line B-B in FIG. 2A;
FIG. 3A is a perspective view illustrating a wire harness sheath formed of one flat plate member, and FIG. 3B is a perspective view illustrating a wire harness sheath formed of a trapezoidal flat plate member and a rectangular flat plate member, which are originally separate from each other, are coupled to each other to form the wire harness sheath;
FIG. 4A is a schematic planar view of a wire harness sheath according to another embodiment not according to the claimed invention, and FIG. 4B is a schematic planar view of a wire harness in a state in which the wire harness sheath is in contact with and supports one surface of a wire assembly;
FIG. 5A is a schematic planar view of a wire harness sheath according to another embodiment not according to the claimed invention, and FIG. 5B is a schematic planar view of a wire harness in a state in which the wire harness sheath is in contact with and supports one surface of a wire assembly;
FIG. 6A is a schematic planar view of a wire harness sheath according to another embodiment not according to the claimed invention, and FIG. 6B is a schematic planar view of a wire harness in a state in which the wire harness sheath is in contact with and supports one surface of a wire assembly;
FIG. 7A is a schematic planar view of a wire harness sheath according to another embodiment not according to the claimed invention, and FIG. 7B is a schematic planar view of a wire harness in a state in which the wire harness sheath is in contact with and supports one surface of a wire assembly;
FIG. 8A is a schematic planar view of a wire harness sheath according to another embodiment not according to the claimed invention, and FIG. 8B is a schematic planar view of a wire harness in a state in which the wire harness sheath is in contact with and supports one surface of a wire assembly;
FIG. 9A is a schematic planar view of a wire harness sheath according to another embodiment not according to the claimed invention, and FIG. 9B is a schematic planar view of a wire harness in a state in which the wire harness sheath is in contact with and supports one surface of a wire assembly;
FIG. 10 is a schematic perspective view of a wire harness sheath according to another embodiment not according to the claimed invention;
FIG. 11 is a schematic perspective view of a wire harness sheath according to another embodiment not according to the claimed invention;
FIG. 12 is a schematic perspective view of a wire harness sheath according to another embodiment according to the claimed invention;
FIG. 13A is a schematic perspective view of a wire harness sheath according to another embodiment not according to the claimed invention, and FIG. 13B is a schematic perspective view of a wire harness in a state in which the wire harness sheath is in contact with and supports one surface of a wire assembly;
FIG. 14A is a schematic perspective view of a wire harness sheath according to another embodiment not according to the claimed invention, and FIG. 14B is a schematic perspective view of a wire harness in a state in which the wire harness sheath is in contact with and supports one surface of a wire assembly;
FIG. 15 is a schematic perspective view of an installation example in which a sheathed wire harness according to an embodiment not according to the claimed invention is laid on an installation surface;
FIG. 16 is a schematic perspective view of a sheathed wire harness according to an embodiment not according to the claimed invention; and
FIG. 17 is a perspective view for explaining a method of regulating a path for a wire bundle B8 of a wire harness by way of a combination of wire harness sheaths.

### PREFERRED MODE FOR CARRYING OUT THE INVENTION

Preferred embodiments of the present invention will be described in detail. Note that the present invention is not limited to the following embodiments.

### 1 Wire Harness Sheath

A wire harness sheath of the present invention is a sheath for a wire harness including a wire assembly. The wire harness sheath is formed of at least one flat plate member made of a resin material, and has a planar portion that is adapted to be in contact with and support one surface of a wire assembly including a plurality of divisional wire bundles branching off and extending from the wire bundle, and thereby regulates a path for the wire harness.

A specific description will be provided below, with reference to the drawings. FIGS. 1A and 1B illustrate a wire harness sheath according to an embodiment not according to the claimed invention in a state in which the wire harness sheath is in contact with and supports one surface of a wire assembly of a wire harness. FIG. 1A is a schematic planar view of the wire harness sheath seen in a direction in which its surface, which is in contact with and supports the one surface of the wire assembly, faces the viewer, and FIG. 1B is a schematic planar view of the wire harness sheath seen in a direction in which a surface opposite to the surface, which is in contact with and supports the one surface of the wire assembly, faces the viewer. The wire harness sheath 1 is a sheath for a wire harness including a wire bundle B1 as a bundle of a plurality of wires L1, L2, L3, L4, L5, and L6. Here, the wire harness sheath 1 is formed of at least one flat plate member made of a resin material, and has a planar portion 11 that is adapted to be in contact with and support one surface of a wire assembly including the wire bundle B1 forming part of the wire harness, and thereby regulates a path for the wire harness. For the sake of convenience, the example illustrated in FIGS. 1A and 1B includes the six wire harnesses arranged on the wire harness sheath 1. However, usually, more wire harnesses are gathered into a bundle and densely arranged.

For the wire harness sheath 1 having the configuration described above, since a planar portion of the wire harness sheath 1 is in contact with and supports one surface of the wire assembly, the path for the wire harness is regulated firmly. Furthermore, since the wire harness sheath 1 is formed of a two-dimensional flat plate member, dead space is less likely to be created when the wire harness sheath 1 is flattened, in comparison with, for example, a corrugated tube with a three-dimensional structure and a protector with a cylindrical shape. Therefore, using the wire harness sheath 1 to lay a wire harness in a vehicle or the like makes it possible to save space, thereby contributing to, for example, downsizing the vehicle or increasing the space inside the vehicle.

The resin material forming the wire harness sheath 1 is not limited to any material, as long as it is plastically deformable and shape-fixable by melting or dissolving and solidifying. The resin material may be composed of either a thermoplastic resin or a thermosetting resin. Specifically, the resin material may be one or more selected from, for example, polyethylene, polypropylene, polyvinyl chloride, polystyrene, AS resin, ABS resin, polyethylene terephthalate, methacrylate resin, polyvinyl alcohol, vinylidene chloride resin, polycarbonate, polyamide, polyimide, acetal resin, polybutylene terephthalate, fluorocarbon resin, phenol resin, melamine resin, urea resin, polyurethane, epoxy resin, and unsaturated polyester resin. From the viewpoint of weight reduction, the resin material is preferably a foamed resin.

The resin material forming the wire harness sheath 1 is not limited to the foamed resin, but is preferably a lightweight resin. From this viewpoint, although the resin material may have any density, the density is preferably 1000 kg/m³ or lower, more preferably 700 kg/m³ or lower, and further more preferably 500 kg/m³ or lower. The density of the resin material may be 200 kg/m³ or higher.

In the case where a foamed resin is used as the resin material, a foamed resin sheet may be punched into a piece having a shape suitable for being in contact with and supporting one surface of a wire assembly of a wire harness, and then, the punched piece is used as the wire harness sheath **1.** In the case where the wire harness sheath 1 is produced by the punching process, it is possible to employ, for example, inexpensive Thomson dies, and flat plate members of various shapes can be manufactured inexpensively by using a wide variety shape of dies.

The resin material may optionally be coated with a coating containing one or more of various additives that are added to ordinary resin materials, according to applications. The additive may be one or more selected from a filler, an antioxidant, a stabilizer, a metal deactivator, a UV absorber, a light stabilizer, a plasticizer, a colorant, a flame retardant, a nucleating agent, a compatibilizer, a transparency agent, an antistatic agent, a lubricant, etc., but is not limited to the foregoing.

The thickness of the wire harness sheath 1 is not particularly limited, but is preferably 0.5 mm to 5.0 mm, and more preferably 0.5 mm to 3.0 mm, for example.

The method of making the wire harness sheath 1 be in contact with and support one surface of a wire assembly is not particularly limited. The wire harness sheath 1 and the wire assembly are fastened together by tapes T1 to T3 wound therearound. A tie or an adhesive may be used to make the wire harness sheath 1 be in contact with and support one surface of a wire assembly (Not covered by the present claims).

The wire harness sheath 1 is preferably configured to be bendable in a thickness direction of the planar portion 11 (a direction perpendicular to the surface of the page of FIG. 1A or FIG. 1B). Configuring the wire harness sheath 1 to be bendable makes it possible for the wire harness to flexibly correspond to a complicated wiring path in a vehicle, and thus, the provided wire harness has excellent workability such as processability and installability **(e.g.,** fastening with tapes) .

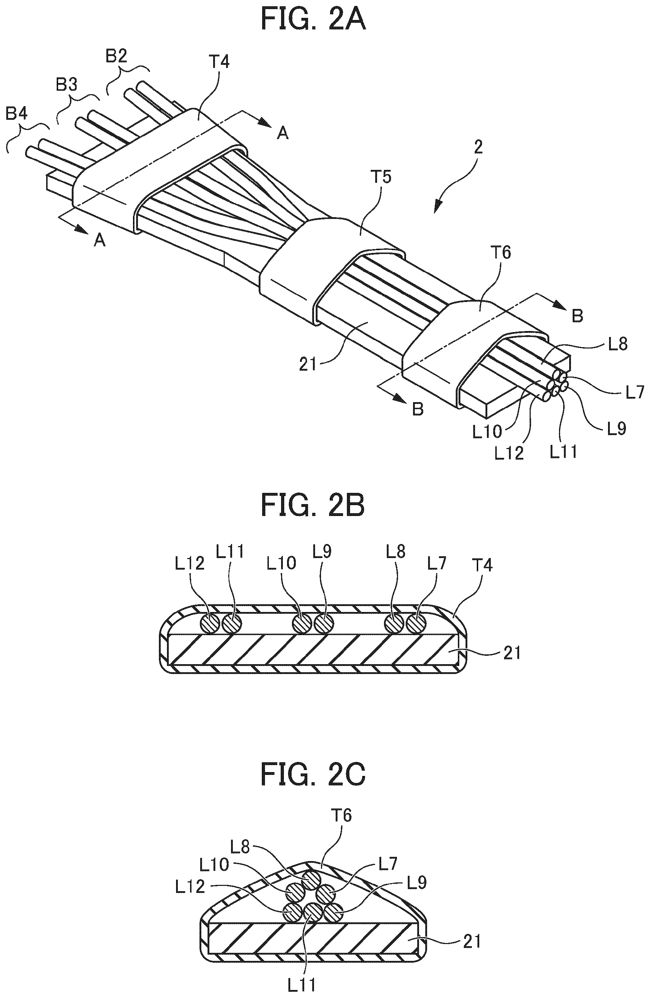

FIGS. 2A, 2B and 2C illustrate a wire harness sheath according to an embodiment of the present invention in a state in which the wire harness sheath is in contact with and supports one surface of a wire assembly of a wire harness. FIG. 2A is a perspective view of the wire harness sheath. FIG. 2B is a cross-sectional view taken along line A-A. FIG. 2C is a cross-sectional view taken along line B-B. The wire harness sheath 2 is for a wire harness that includes a divisional wire bundle B2 as a bundle of a plurality of wires L7 and L8, a divisional wire bundle B3 as a bundle of a plurality of wires L9 and L10, and a divisional wire bundle B4 as a bundle of a plurality of wires L11 and L12. The wire harness sheath 2 is formed of at least one flat plate member made of a resin material, and has a planar portion 21 that is adapted to be in contact with and support one surface of a wire assembly including the plurality of divisional wire bundles B2, B3, and B4 branching off and extending from a wire bundle as a bundle of the plurality of wires L7 to L12, and thereby regulates a path for the wire harness. In the non-limiting example illustrated in FIGS. 2A, 2B and 2C, six wires are arranged on the wire harness sheath 2, but the number of wires is not limited to six. In the non-limiting example illustrated in FIGS. 2A, 2B and 2C, the wires are divided into the divisional wire bundles B2, B3, and B4, but the wires may be arranged side by side at regular intervals in a plane direction.

The planar portion 21 of the wire harness sheath 2 has a width dimension conforming to changes in the cross-sectional shape of the wire assembly in the longitudinal direction. For example, the six wires L7 to L12 on the wire harness sheath 2 are gathered in a right portion of the page, but branch off into the divisional wire bundles B2, B3, and B4 in a left portion of the page. As the divisional wire bundles B2, B3, and B4 separate from one other after branching off in this manner, the cross-sectional shape of the wire assembly increases in width in the longitudinal direction. Thus the width dimension of the planar portion 21 of the wire harness sheath 2 varies and increases in conformity with the cross-sectional shape of the wire assembly. This configuration makes it easier to regulate and guide the wire bundles B2, B3, and B4 in the respective branching directions. The cross-sectional shape of the wire assembly in the longitudinal direction can be defined as the shape of a cross section orthogonal to the direction in which the wire assembly extends.

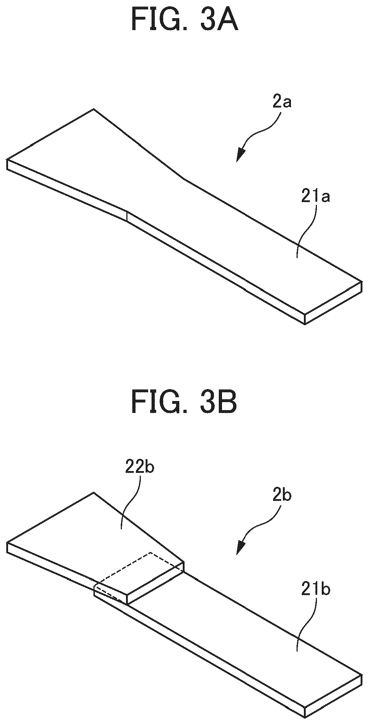

The planar portion 21 of the wire harness sheath 2 may be formed of one flat plate member. On the other hand, the planar portion 21 of the wire harness sheath 2 may be formed of a plurality of flat plate members coupled to each other. Here, reference is made to FIG. 3A, which is a perspective view illustrating a wire harness sheath 2a formed of one flat plate. FIG. 3B is a perspective view illustrating a wire harness sheath 2b formed of a plurality of flat plate members coupled to each other, namely, a trapezoidal flat plate member and a rectangular flat plate member coupled to each other. In the wire harness sheath 2b illustrated in FIG. 3B, the plurality of flat plate members are bonded to each other to form planar portions 21b and 22b of one wire harness sheath 2b.

As illustrated in FIG. 3B as an example, according to the embodiment of the present invention, flat plates of various basic shapes, such as a trapezoidal flat plate, a rectangular flat plate, a flat plate of a special shape other than the rectangular shape, and a polygonal flat plate with an angle larger than 180°, can be prepared as preformed parts to be used as flat plate members, and two or more of such flat plate members can be combined as appropriate to form a wire harness sheath. By preparing the materials as preformed parts in this way, sufficient wire harness sheaths of various shapes can be produced in accordance with the intended use, and the yield rate can be improved when punching or other similar process is performed. In addition, because wire harness sheaths of various shapes can be produced by combining such relatively simple shapes, it is no longer necessary to provide various types of punching dies (Thomson dies).

On the other hand, from the viewpoint of the above-mentioned bendability, it is preferable to form the wire harness sheath from one flat plate member, as in the case of the wire harness sheath 2a illustrated in FIG. 3A.

The shape of the wire harness sheath can be designed as appropriate according to the branching directions of wire bundles or the space in which the wire bundles are laid. In the following, modifications of the wire harness sheath of the present invention will be specifically described.

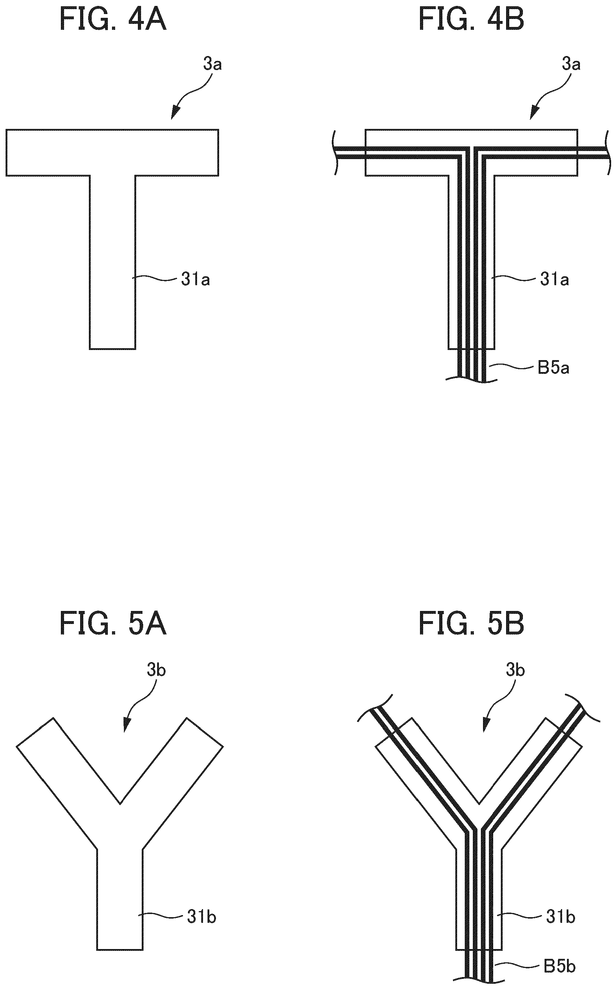

In each of FIGS. 4 to 9, FIGS. 4A to 9A are schematic planar views of a wire harness sheath according to other embodiments not according to the claimed invention, and FIGS. 4B to 9B are schematic planar views of a wire harness in a state in which the wire harness sheath is in contact with and supports one surface of a wire assembly. The wire harness sheaths illustrated in FIGS. 4 to 9 all have a flat plate shape.

The wire harness sheath 3a illustrated in FIGS. 4A and 4B is formed of one flat plate member and has a T-shaped planar portion 31a. A wire bundle B5a extends from a bottom portion of the page and branches in two directions, namely a horizontal right direction and a horizontal left direction.

The wire harness sheath 3b illustrated in FIGS. 5A and 5B is formed of one flat plate member and has a Y-shaped planar portion 31b. A wire bundle B5b extends from a bottom portion of the page and branches in two directions, namely an upper right direction and an upper left direction.

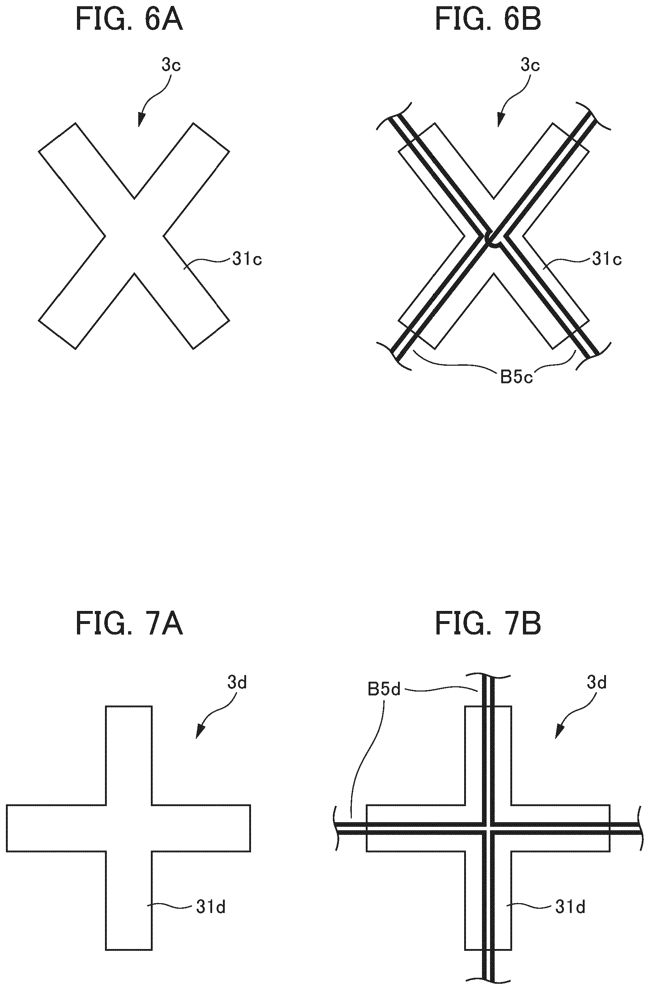

The wire harness sheath 3c illustrated in FIGS. 6A and 6B is formed of one flat plate member and has an X-shaped planar portion 31c. Wire bundles B5c extend from a lower right portion and a lower left portion of the page, respectively, and each branch in two directions, namely, an upper right direction and an upper left direction.

The wire harness sheath 3d illustrated in FIGS. 7A and 7B is formed of one flat plate member and has a cruciform planar portion 31d. Wire bundles B5d extend from right and left portions of the page, respectively, and each branch in two directions, namely, an upward direction and a downward direction.

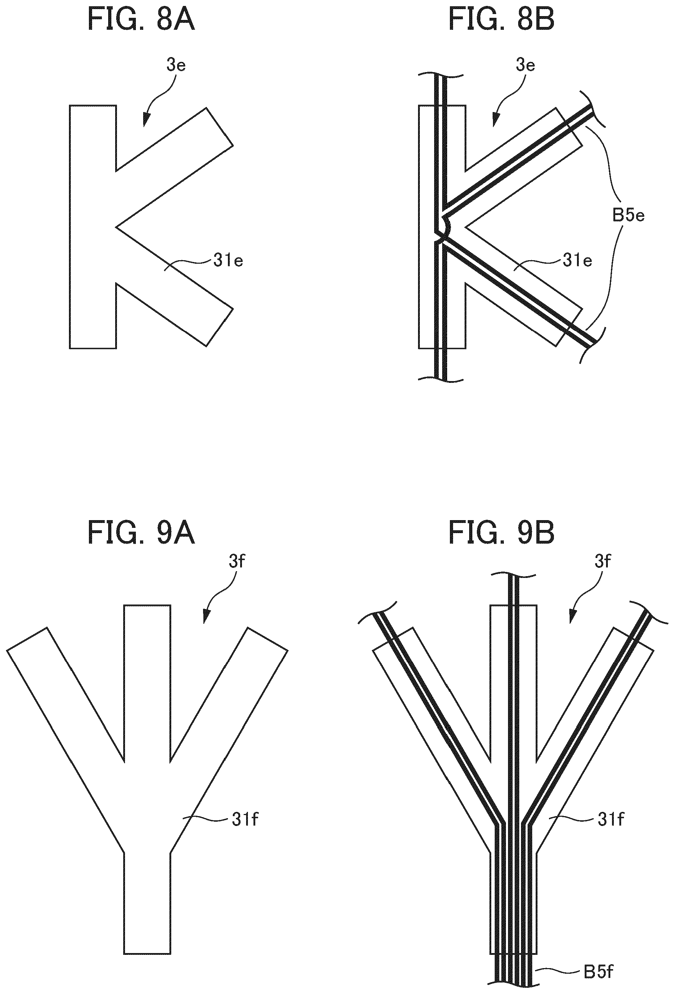

The wire harness sheath 3e illustrated in FIGS. 8A and 8B is formed of one flat plate member and has a K-shaped planar portion 31e. Wire bundles B5e extend from upper and lower portions of the page, respectively, and each branch in two directions, namely, an upper right direction and a lower right direction.

The wire harness sheath 3f illustrated in FIGS. 9A and 9B is formed of one flat plate member and has a planar portion 31f extending from a bottom portion of the page and branching in three directions, namely, an upper left direction, an upward (vertical) direction, and an upper right direction. A wire bundle B5f is arranged along the planar portion whereby it extends from the bottom portion of the page and branches in three directions, namely, the upper left direction, the upward (vertical) direction, and the upper right direction.

The wire harness sheath 3f illustrated in FIGS. 9A and 9B can be used to divide one wire bundle into two or more divisional wire bundles (three divisional bundles in the figures) or to bundle two or more divisional wire bundles into one bundle, just like the wire harness sheath 3 illustrated in FIGS. 2A, 2B and 2C. In a case where a wire bundle branches in the same manner, the wire harness sheath 3f illustrated in FIGS. 9A and 9B regulates the branching directions more specifically than the wire harness sheath 3 illustrated in FIGS. 2A, 2B and 2C, because the wire harness sheath 3f allows the wire bundles to extend along the branches of the wire harness sheath 3f and enables each of the wire bundles to be fastened to an associated one of the branches with tapes, for example. On the other hand, the wire harness sheath 3 illustrated in FIGS. 2A, 2B and 2C is more effective in preventing external shocks, etc. because the wire harness sheath 3 has a larger area, and accordingly, the possibility that the wire bundles to be subjected to external shocks, etc. is reduced.

As mentioned above, the wire harness sheath may be formed by combining two or more members, which have been prepared as the preformed parts. In the following, such examples will be described by referring to the drawings.

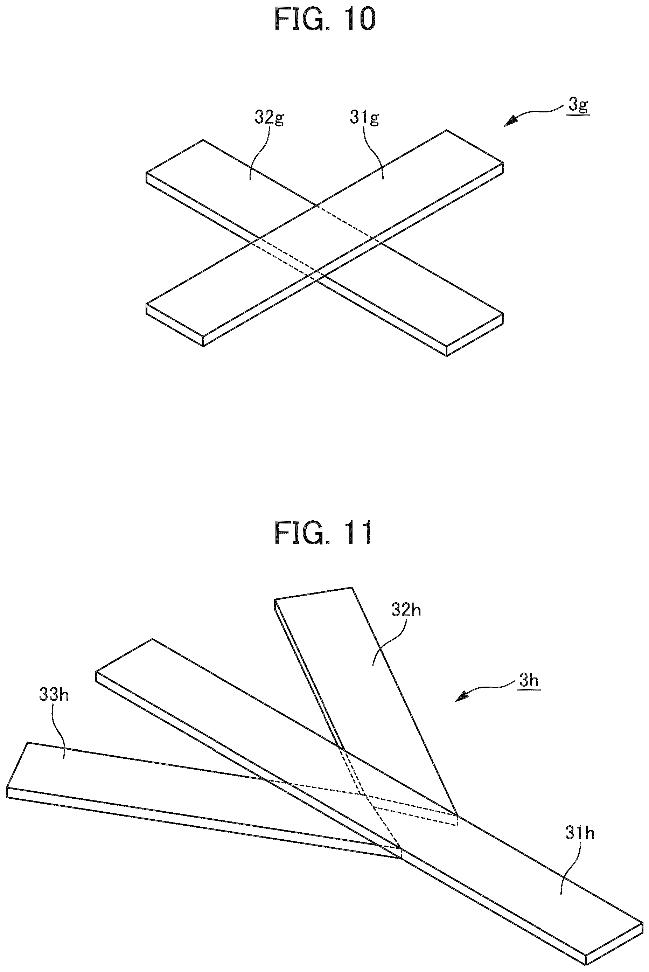

For example, FIGS. 10 to 12 are each a schematic perspective view of a wire harness sheath according to other embodiments. Figs. 10 and 11 are not according to the claimed invention.

The wire harness sheath 3g illustrated in FIG. 10 is formed of two rectangular flat plate members 31g and 32g and has a cruciform planar portion that is similar to the planar portion 31d of the wire harness sheath 3d illustrated in FIGS. 7A and 7B.

The wire harness sheath 3h illustrated in FIG. 11 is formed of three rectangular flat plate members 31h, 32h, and 33h and has a planar portion that is similar to the planar portion 31f of the wire harness sheath 3f illustrated in FIGS. 9A and 9B.

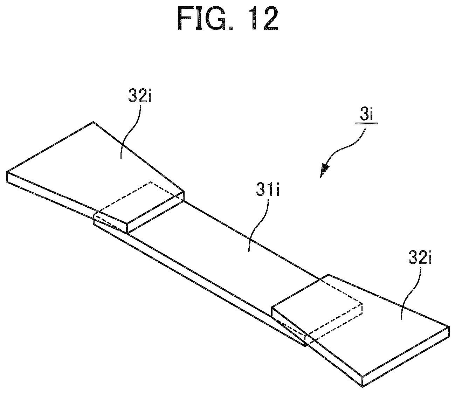

The wire harness sheath 3i illustrated in FIG. 12 is formed of one rectangular flat plate member 31i and trapezoidal flat plate members 32i and 33i.

All the wire harness sheaths described above per se have a flat plate shape. In order to regulate the path of the wire harness and to significantly enhance space saving and bendability, the wire harness sheaths preferably have a flat plate shape.

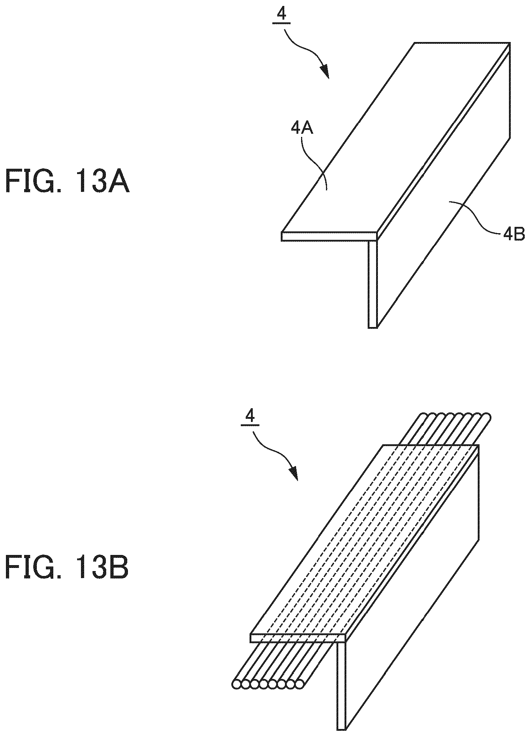

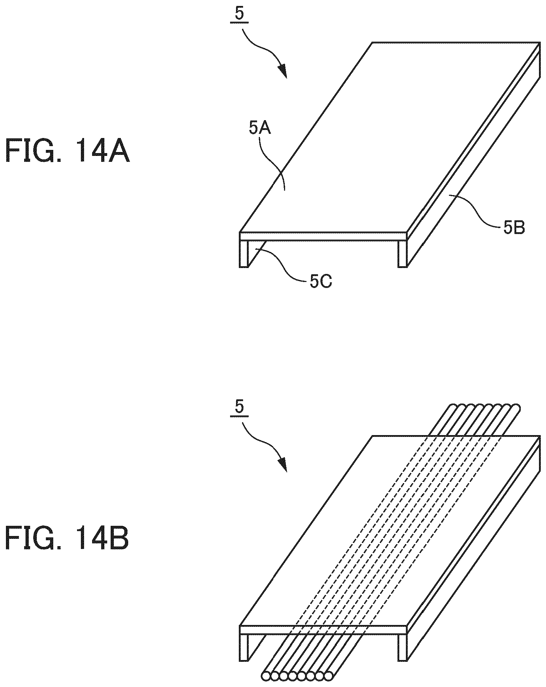

However, the wire harness sheaths are not limited to such a flat plate shape. In each of FIGS. 13 and 14, (a) is a schematic perspective view of a wire harness sheath according to another embodiment not according to the claimed invention, and (b) is a schematic perspective view of a wire harness in a state in which the wire harness sheath is in contact with and supports one surface of a wire assembly.

For example, as illustrated in FIGS. 13A and 13B, it is conceivable to form a wire harness sheath 4 from two rectangular flat plate members 4A and 4B that are orthogonally joined at their respective long edges.

As illustrated in FIGS. 14A and 14B, it is conceivable to form a wire harness sheath 5 from one rectangular flat plate member 5A and elongated rectangular flat plate members 5B and 5C that are orthogonally joined to two edges of the flat plate member 5A.

These non-flat sheaths are effective, for example, in preventing contact with other objects from two or more directions.

### 2 Sheathed Wire Harness

A sheathed wire harness according to the present embodiment includes a wire harness and the wire harness sheath described above. The wire harness sheath is formed of at least one plate shape material made of a resin material, and has a planar portion that is in contact with and supports one surface of a wire assembly including a plurality of divisional wire bundles branching off and extending from the wire bundle, and thereby regulates a path for the wire harness.

The wire harness sheath may have a surface positioned to hold a wire assembly between the surface and an installation surface on which the wire assembly is laid, and thereby protect the wire assembly.

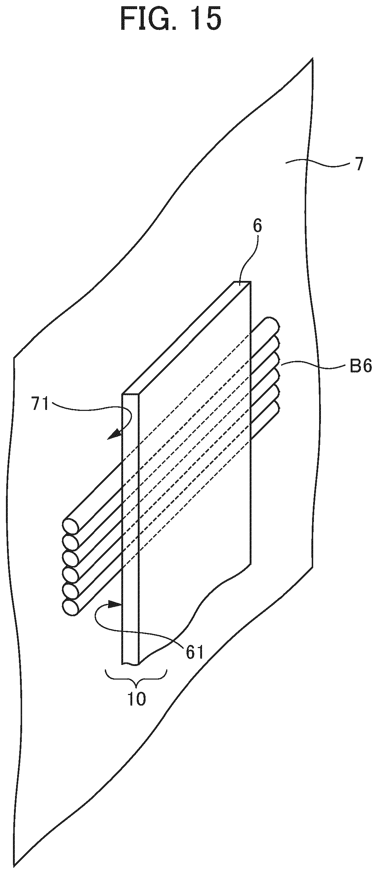

FIG. 15 is a schematic perspective view of an installation example in which a sheathed wire harness according to an embodiment not according to the claimed invention is laid on an installation surface. The wire harness sheath 6 illustrated in FIG. 15 has a surface positioned to hold a wire assembly B6 between the surface and an installation surface 71 on which the wire assembly B6 is laid, and thereby protects the wire assembly B6. Here, the installation surface 71 on which the wire assembly B6 is laid may be, for example, an inside wall of a vehicle.

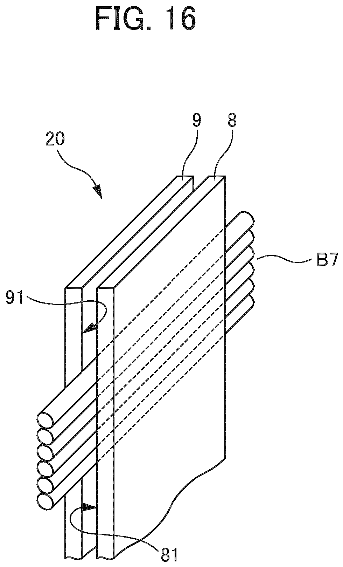

The wire assembly of the wire harness may be held between two (unjoined) sheaths. FIG. 16 is a schematic perspective view of a sheathed wire harness according to an embodiment not according to the claimed invention. The sheathed wire harness 20 illustrated in FIG. 16 includes a wire bundle B7 held between two wire harness sheaths 8 and 9 arranged parallel to each other and having respective planar portions 81 and 91 facing each other. In this case, one surface of the wire bundle B7 only has to be in contact with and supported by either one of the planar portions 81 and 91, and may be in contact with and supported by both the planar portions 81 and 91.

A technique for arranging a wire assembly of a wire harness is constituted by making a planar portion of a wire harness sheath be in contact with and support one surface of the wire assembly. Specific examples of the technique are illustrated in FIGS. 1 to 11.

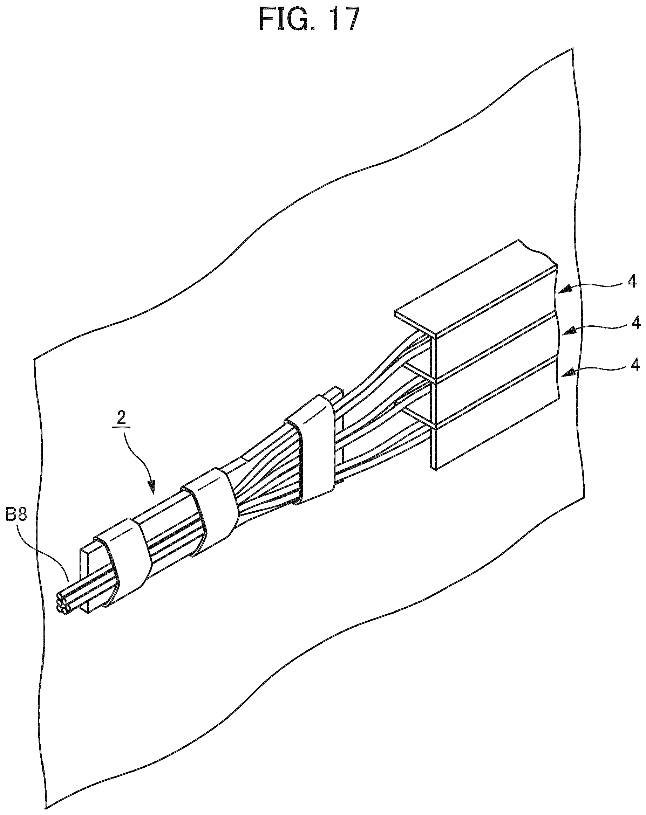

In an actual vehicle, a wire assembly of a wire harness is arranged three-dimensionally in respective directions. The wire harness sheath may be a combination of two or more of the embodiments described above so as to regulate a path for the wire harness into a desired shape. FIG. 17 is a perspective view for explaining a method of regulating a path for a wire bundle B8 of a wire harness by way of a combination of wire harness sheaths. In the embodiment illustrated in FIG. 17, the wire bundle B8 is divided into three parts by means of the wire harness sheath 2, and the divisional three parts of the wire bundle 8B are arranged, on a one-to-one basis, in three wire harness sheaths 4 aligned in the vertical direction of the page.

### EXPLANATION OF REFERENCE NUMERALS

1, 2, 2a, 2b, 3a, 3b, 3c, 3d, 3e, 3f, 4, 5, 6, 8, 9: Wire harness sheath
7: Wall surface
10, 20: Sheathed wire harness
21, 31a, 31b, 31c, 31d, 31e, 31f, 81, 91: Planar portion
31g, 32g, 31h, 32h, 33h, 4a, 4b, 6a, 6b, 6c: Flat plate member
B1, B5a, B5b, B5c, B5d, B5e, B6, B7, B8: Wire bundle
B2, B3, B4: Divisional wire bundle
L1 to L12: Wire
T1 to T6: Tape

## Claims

1. A sheathed wire harness comprising a wire harness sheath (2) and a wire harness,
wherein the wire harness has a wire bundle as a bundle of a plurality of wires (L7 to L12) being gathered, and a wire assembly including a plurality of divisional wire bundles (B2, B3, B4) branching off and extending from the wire bundle,
wherein the divisional wire bundles (B2, B3, B4) separate from each other after branching off from the wire bundle and a cross-sectional shape of the wire assembly increases in width in a longitudinal direction of the wire assembly,
wherein the wire harness sheath (2) is formed from at least one flat plate member made of a resin material, and has a planar portion (21) that regulates a path for the wire harness,
wherein the planar portion (21) is in contact with and supports one surface of the wire bundle and
one surface of the wire assembly, and thereby regulates a path for the wire harness,
A wherein
the wire harness sheath (2) and the wire harness are fastened together by tapes (T4, T5, T6) wound directly and only around the wire bundle and the wire harness sheath (2), and around the divisional wire bundles (B2, B3, B4) and the wire harness sheath (2), and
wherein
the planar portion (21) is branch-free, and has a width dimension conforming to the change in the cross-sectional shape of the wire assembly, after the branching off of the divisional wire bundles (B2, B3, B4) from the wire bundle.

2. The sheathed wire harness according to claim 1, wherein
the resin material is a foamed resin.

3. The sheathed wire harness according to claim 1 or 2, wherein
the planar portion (21) is formed of one flat plate member.

4. The sheathed wire harness according to claim 1 or 2, wherein
the planar portion (21) is formed of a plurality of flat plate members coupled to each other.

5. The sheathed wire harness according to any one of claims 1 to 4, wherein the wire harness sheath (2) is bendable in a thickness direction of the planar portion (21).

## Patentansprüche

1. Ummantelter Kabelbaum mit einer Kabelbaumummantelung (2) und einem Kabelbaum,
wobei der Kabelbaum ein Kabelbündel als ein Bündel aus einer Vielzahl von Drähten (L7 bis L12), die zusammengefasst sind, und eine Drahtanordnung aufweist, die eine Vielzahl von Zweigdrahtbündeln (B2, B3, B4) aufweist, die sich von dem Kabelbündel abzweigen und erstrecken,
wobei die Zweigdrahtbündel (B2, B3, B4) nach dem Abzweigen vom Kabelbündel voneinander getrennt sind und eine Querschnittsform der Drahtanordnung in Längsrichtung der Drahtanordnung in der Breite zunimmt,
wobei die Kabelbaumummantelung (2) aus mindestens einem flachen Plattenelement aus einem Harzmaterial gebildet ist und einen ebenen Abschnitt (21) aufweist, der einen Weg für den Kabelbaum reguliert,
wobei der ebene Abschnitt (21) mit einer Oberfläche des Kabelbündels und der Drahtanordnung in Kontakt steht und diese stützt und dadurch einen Weg für den Kabelbaum reguliert, wobei
die Kabelbaumummantelung (2) und der Kabelbaum durch Bänder (T4, T5, T6) miteinander verbunden sind, die direkt und nur um das Kabelbündel und die Kabelbaumummantelung (2) sowie um die Zweigdrahtbündel (B2, B3, B4) und die Kabelbaumummantelung (2) gewickelt sind, und wobei
der planare Abschnitt (21) verzweigungsfrei ist und eine Breitenabmessung aufweist, die der Änderung der Querschnittsform der Drahtanordnung nach dem Abzweigen der Zweigdrahtbündel (B2, B3, B4) vom Kabelbündel entspricht.

2. Ummantelter Kabelbaum gemäß Anspruch 1, wobei
das Harzmaterial ein Schaumharz ist.

3. Ummantelter Kabelbaum gemäß Anspruch 1 oder 2, wobei
der planare Abschnitt (21) aus einem flachen Plattenelement ausgebildet ist.

4. Ummantelter Kabelbaum gemäß Anspruch 1 oder 2, wobei
der planare Abschnitt (21) aus mehreren miteinander gekoppelten flachen Plattenelementen ausgebildet ist.

5. Ummantelter Kabelbaum gemäß einem der Ansprüche 1 bis 4,
wobei die Kabelbaumummantelung (2) in einer Dicke-Richtung des planaren Abschnitts (21) biegbar ist.

## Revendications

1. Faisceau de fils gainés comprenant une gaine de faisceau de fils (2) et un faisceau de fils,
dans lequel le faisceau de fils présente un paquet de fils sous la forme d'un paquet d'une pluralité de fils (L7 à L12) qui sont rassemblés, et un ensemble fil incluant une pluralité de paquets de fils divisionnaires (B2, B3, B4) qui se ramifient et s'étendent à partir du paquet de fils,
dans lequel les paquets de fils divisionnaires (B2, B3, B4) se séparent les uns des autres après la ramification du paquet de fils et une forme de section transversale de l'ensemble fil augmente en largeur dans une direction longitudinale de l'ensemble fil,
dans lequel la gaine du faisceau de fils (2) est formée d'au moins un élément de plaque plate composé d'un matériau de résine, et présente une partie plane (21) qui régule un chemin pour le faisceau de fils,
dans lequel la partie plane (21) est en contact avec, et supporte, une surface du paquet de fils et une surface de l'ensemble fil et régule, de ce fait, un chemin pour le faisceau de fils, dans lequel
la gaine de faisceau de fils (2) et le faisceau de fils sont fixés ensemble par des rubans (T4, T5, T6) enroulés directement et uniquement autour du paquet de fils et de la gaine de faisceau de fils (2), et autour des paquets de fils divisionnaires (B2, B3, B4) et de la gaine de faisceau de fils (2), et dans lequel
la partie plane (21) est sans branches et présente une dimension de largeur conforme au changement de forme de section transversale de l'ensemble fil, après la ramification des paquets de fils divisionnaires (B2, B3, B4) à partir du faisceau de fils.

2. Faisceau de fils gainés selon la revendication 1, dans lequel
le matériau en résine est une résine expansée.

3. Faisceau de fils gainés selon la revendication 1 ou 2, dans lequel
la partie plane (21) est formée d'un élément de plaque plate.

4. Faisceau de fils gainés selon la revendication 1 ou 2, dans lequel
la partie plane (21) est formée d'une pluralité d'éléments de plaque plate couplés les uns aux autres.

5. Faisceau de fils gainés selon l'une quelconque des revendications 1 à 4, dans lequel la gaine de faisceau de fils (2) peut être pliée dans le sens de l'épaisseur de la partie plane (21).
